# EUROPÄISCHE PATENTANMELDUNG

(11) **EP 2 420 623 A2**
(43) Veröffentlichungstag der Anmeldung: **22.02.2012**
(21) Anmeldenummer: 11178147.2
(22) Anmeldetag: 19.08.2011
(51) Int. Cl.: E02B 17/00, E02B 17/02, E02D 27/42, F03D 1/00, F03D 11/04

(54) **Gründungsstruktur für eine Offshore-Windenergieanlage (Sandwich-Gründungsstruktur)**

(30) Priorität: 20.08.2010 DE 102010035025; 20.08.2010 DE 102010035035
(71) Anmelder: Hilgefort GmbH Anlagenkomponenten und Apparatebau, 49413 Dinklage (DE)
(72) Erfinder: Baumfalk, Frank, 27801 Dötlingen (DE)
(74) Vertreter: Eisenführ, Speiser & Partner

(57) **Zusammenfassung**

Die Erfindung betrifft eine Gründungsstruktur (1) für eine Offshore-Windenergieanlage, mit mehreren, insbesondere drei, Gründungspfählen (2, 3, 4) und einer die oberen Enden der Gründungspfähle (2, 3, 4) verbindenden Stützkonstruktion (5) für den Turm der Windenergieanlage.
Erfindungsgemäß wird vorgeschlagen, dass jeder Gründungspfahl (2, 3, 4) im Wesentlichen über seine gesamte Länge eine Wandung aus mehreren Lagen (19, 20, 21) unterschiedlichen Materials aufweist, wobei die Wandung aus zumindest einem Flächenstück mit einer inneren Lage (19) und einer äußeren Lage (20) gebildet ist, und wobei zwischen innerer Lage (19) und äußerer Lage (20) als Zwischenlage (21) ein Kernwerkstoff angeordnet ist.

## Beschreibung

Die Erfindung bezieht sich auf eine Gründungsstruktur für eine Offshore-Windenergieanlage, mit zumindest mehreren Gründungspfählen, wobei jeder Gründungspfahl einen abschnittsweise in seinem Inneren geführten Rammpfahl zur Verankerung im Meeresboden aufweist, und mit mindestens einer Stützkonstruktion zur Aufnahme des Wasserbauwerkes, wobei die Stützkonstruktion die oberen Enden der Gründungspfähle untereinander verbindet.

Die Erfindung bezieht sich desweiteren auf eine Gründungsstruktur für eine Offshore-Windenergieanlage, mit zumindest mehreren Gründungspfählen und mit mindestens einer die oberen Enden der Gründungspfähle verbindenden Stützkonstruktion für den Turm der Windenergieanlage.

Gründungsstrukturen der vorbezeichneten Gattung, insbesondere Gründungsstrukturen für Offshore-Windenergieanlagen, werden vornehmlich eingesetzt, um Windenergieanlagen in so genannten Offshore-Windparks aufstellen zu können. Damit die Errichtung in ausreichender Entfernung zur Küste erfolgen kann, ist es in der Regel notwendig die Windenergieanlagen mit Hilfe der Gründungsstrukturen in Wassertiefen von 20 bis 50 Metern zu verankern. Dabei ist stets eine betriebssichere Langzeitfunktion der zur Anwendung kommenden Gründungsstrukturen von mindestens 20 Jahren zu gewährleisten.

Aufgrund der an einem solchen Aufstellort vorherrschenden Umgebungsbedingungen und den damit in der Regel auf die Gründungsstruktur und das Wasserbauwerk einwirkenden Wind- und Wellenlasten, werden entsprechend hohe Anforderungen an die Verankerung der Gründungsstruktur im Meeresboden und die die Windenergieanlage tragende Gründungsstruktur selbst gestellt.

Durch die stetige Zunahme der erzeugten, elektrischen Leistungen der zu montierenden Windenergieanlagen von derzeit 5 MW steigen ebenfalls die Anforderungen an die Festigkeit der die Windenergieanlage tragenden Gründungsstrukturen. Die Anforderungen steigen zudem weiter, je mehr die Wassertiefen zunehmen, in denen die Windenergieanlagen in Form von Windparks errichtet werden. Um eine ausreichende Festigkeit der Gründungsstruktur zu gewährleisten und somit insbesondere bleibende Verformungen zu vermeiden, weisen sowohl die Gründungspfähle als auch die Stützkonstruktion entsprechende Wanddicken aus Stahl von zum Beispiel 50 bis 70 Millimetern auf. Derartige Wanddicken sind dabei notwendig, um ein Beulen des vornehmlich zum Einsatz kommenden Stahls zu vermeiden. Durch die relativ großen Wanddicken entstehen jedoch zum einen hohe Fertigungs- und Materialkosten und zum anderen weisen derartige Gründungsstrukturen ein relativ hohes Eigengewicht auf, so dass solche Gründungsstrukturen üblicherweise nur mit den schwersten Hebezeugen bewältigt bzw. bewegt werden können.

In der EP 1 673 536 B1 ist beispielsweise eine Gründungsstruktur für eine Offshore-Windenergieanlage beschrieben, welche mehrere Gründungspfähle mit jeweils im Inneren der Gründungspfähle wenigstens abschnittsweise geführten Rammpfählen zur Verankerung im Meeresboden aufweist. Die Gründungsstruktur weist des Weiteren mindestens eine Stützkonstruktion zur Aufnahme des Turmes der Windenergieanlage auf, wobei die Stützkonstruktion die oberen Enden der Gründungspfähle untereinander verbindet. Dabei ist nach dem Rammen der Rammpfähle ein vorgegebener Längenabschnitt erzeugt, in dem die Rammpfähle von den Gründungspfählen aufgenommen sind. Um die Relativbewegung zwischen den Gründungspfählen und den Rammpfählen zu unterbinden und dadurch möglicherweise ein Lockern der Verankerung der Gründungsstruktur im Meeresboden zu verursachen, wird ein Teilabschnitt des Überdeckungsbereiches zwischen der Außenseite des Rammpfahles und der Innenseite des Gründungspfahles verklebt. Durch die relativ schmale Verklebung zwischen der Außenseite des Gründungspfahles und der Innenseite des Rammpfahles besteht zum einen das Risiko, dass die Verklebung reißt und somit der Rammpfahl wieder beweglich zum Gründungspfahl ist. Zum anderen wirkt im Bereich des Meeresbodens das größte durch Wind- und Wellenlasten hervorgerufene Moment auf die Gründungs- und Rammpfähle der Gründungsstruktur, so dass es durch die ständigen Lastwechsel kurz unterhalb des Überdeckungsbereiches der Pfähle zur Verformung und gegebenenfalls zum Knicken der Wandungen der Rammpfähle kommen kann, was sich in jedem Fall nachteilig auf deren Verankerung und damit auf die betriebssichere Langzeitfunktion der Gründungsstruktur auswirken kann.

Der Erfindung liegt daher die Aufgabe zugrunde, eine Gründungsstruktur vorbezeichneter Gattung dahingehend zu verbessern, dass Verformungen an den Pfählen, aufgrund der wirkenden Lastwechsel vermieden sind.

Der Erfindung liegt ferner die Aufgabe zugrunde, eine Gründungsstruktur der vorbezeichneten Gattung dahingehend zu verbessern, dass deren Fertigung auf vereinfachte Weise und somit kostengünstig möglich ist und zum anderen der Transport an den Aufstellort mit verringertem Aufwand erfolgen kann.

Die Lösung der Aufgabe erfolgt erfindungsgemäß durch eine Gründungsstruktur mit den Merkmalen des Patentanspruches 1. Vorteilhafte Weiterbildungen und Ausgestaltungen der Erfindung sind in den Unteransprüchen angegeben.

Bei einer Gründungsstruktur für eine Offshore-Windenergieanlage mit zumindest mehreren Gründungspfählen, wobei jeder Gründungspfahl einen wenigstens abschnittsweise in seinem Inneren geführten Rammpfahl zur Verankerung im Meeresboden aufweist, und mit mindestens einer Stützkonstruktion zur Aufnahme des Turms einer Windenergieanlage, wobei die Stützkonstruktion die oberen Enden der Gründungspfähle untereinander verbindet, ist vorgesehen, dass der Gründungspfahl und der Rammpfahl auf einem vorbestimmten Längenabschnitt einen Bereich einer Überdeckung aufweisen, wobei im Überdeckungsbereich der Pfähle zumindest abschnittsweise der Spalt zwischen den Pfählen sowie über einen Abschnitt des Überdeckungsbereiches und in einem Teilstück unterhalb des Überdeckungsbereiches der freie, innere Querschnitt des Rammpfahles mit einem aushärtenden Füllmaterial verfüllt ist.

Mit Hilfe einer derartig festen Struktur um den Überdeckungsbereich der Gründungspfähle und der von den Gründungspfählen bereichsweise aufgenommenen Rammpfähle ist insbesondere ein Knicken oder Beulen der Pfahlwandungen im Bereich des Meeresbodens durch das innerhalb des Rammpfahles und des zwischen Gründungspfahl und Rammpfahles abschnittsweise ausgehärtete Füllmaterial auf vorteilhafte Weise vermieden. Das bis unterhalb des Überdeckungsbereiches im Inneren des Rammpfahles reichende Füllmaterial verleiht diesem über ein vorbestimmtes Teilstück eine optimale Steifigkeit, wodurch die Ausgestaltung des Rammpfahles aus einem einwandigen Rohr möglich ist. Durch das bevorzugt jeweils von unterhalb bis oberhalb des Überdeckbereiches reichende, aushärtende Füllmaterial, wie zum Beispiel Beton, ist mit Vorteil eine Gründungsstruktur erzeugt, mittels der sich problemlos eine betriebssichere Langzeitfunktion von den mindestens geforderten 20 Jahren gewährleisten lässt.

Mit Vorteil ist nach einer Weiterbildung vorgesehen, dass der Gründungspfahl im Fußbereich eine seinen freien Querschnitt an der inneren Mantelfläche verringernde Führung für den Rammpfahl aufweist. Die Verwendung einer Führung hat den Vorteil, dass der Rammpfahl während des Rammens insbesondere zu Beginn der Rammarbeiten axialbeweglich geführt ist, so dass der Rammpfahl mit seiner Mittenachse vorzugsweise koaxial zur Mittenachse des Gründungspfahles in den Meeresboden getrieben wird. Ein Verlaufen des Rammpfahles soll somit vorteilhaft vermieden werden. Die Führung ist dabei etwa über die Hälfte des Überdeckungsbereiches der beiden Pfähle im Spalt zwischen der Innenseite des Gründungspfahles und der Außenseite des Rammpfahles zumindest bereichsweise über den Umfang ausgebildet. Die Führung kann beispielsweise als Buchse ausgebildet sein. Bevorzugt werden mehrere Bleche eingesetzt, deren Längsachsen parallel zur Mittenachse des Gründungspfahles verlaufen und sich radial von der Innenseite des Gründungspfahles in Richtung der Mittenachse erstrecken.

Der Gründungspfahl weist optional einen Bodenring mit einer den Spalt zum Rammpfahl abdichtenden Dichtung auf, wodurch zum einen während und nach dem Rammen das Eindringen von Meerwasser, sowie Schlamm- oder Gesteinsteilen insbesondere in den Spalt im Bereich der Führung vermieden ist. Somit ist eine ungewollte Verschmutzung des nach-folgend auszubetonierenden Abschnitts von Gründungspfahl und Rammpfahl ausgeschlossen. Zum anderen verhindert die Dichtung im Bereich des Spaltes ebenfalls das Austreten des nachträglich eingebrachten Füllmaterials. Das aushärtende Füllmaterial verbleibt somit stets auf gleichem Niveau im Spalt zwischen Gründungspfahl und Rammpfahl und kann dementsprechend eine feste Verbindung mit den Oberflächen der jeweiligen Pfahlwandungen eingehen. Zur Ausbildung der am Bodenring vorgesehenen Dichtung kann beispielsweise ein Filz oder anderes geeignetes Material zum Einsatz kommen, das geeignet ist, um einen Wassereintritt oder das Eindringen von Schlamm auszuschließen. Auf dem Bodenring kann des Weiteren von unten eine Berstscheibe aufgesetzt sein, welche den freien Querschnitt des vorzugsweise als Rohr ausgebildeten und damit unten offenen Rammpfahles wirkungsvoll verschließt und somit das Eindringen von Meerwasser bereits beim Absenken des zur Ausbildung der Gründungsstruktur dienenden Konstruktionsteiles auf den Meeresboden verhindert: Bereits beim Aufsetzen des Konstruktionsteiles auf den Meeresboden, jedoch spätestens mit dem Beginn der Rammarbeiten wird die Berstscheibe durch den vorzugsweise senkrecht nach unten getriebenen Rammpfahl zerstört, welche dabei kein Hindernis für die durchzuführenden Rammarbeiten darstellt.

Alternativ kann es vorteilhaft sein, keine Dichtung vorzusehen. So kann Wasser bei einem Absenken der Gründungsstruktur von einem Schiff aus auf den Meeresboden kontrolliert und gleichmäßig in die Gründungspfähle eindringen. Die Gefahr, dass durch ein plötzlich auftretendes Leck in einem abgedichteten Gründungspfahl eine plötzliche Schwerpunktverschiebung und somit ein Kippen der Gründungsstruktur auftritt, wird verringert. Die Dichtung sowie die Berstscheibe kann dann entfallen.

Der Gründungspfahl weist erfindungsgemäß ein seine innere Mantelfläche ausbildendes Innenrohr und ein seine äußere Mantelfläche ausbildendes Außenrohr auf, wobei zwischen Innenrohr und Außenrohr ein Kernwerkstoff angeordnet ist. Mit einem derartig erfindungsgemäßen Wandungsaufbau ist eine konstruktiv vorteilhafte Möglichkeit zur Ausbildung der Gründungspfähle erreicht. Durch den Sandwich-Aufbau der Pfahlwandung ist zum einen die Steifigkeit des Gründungspfahles verbessert und zum anderen kann die Menge des üblicherweise zur Ausbildung des Gründungspfahls verwendeten Stahls vorteilhaft verringert werden. Durch die erhöhte Steifigkeit lassen sich sowohl die Durchmesser als auch die Gesamtstärke des Innen- und Außenrohres deutlich minimieren, was gleichzeitig die Wirtschaftlichkeit solcher erfindungsgemäßer Gründungsstrukturen, aufgrund reduzierter Fertigungs- und Materialkosten, auf vorteilhafte Weise verbessert. Der Kernwerkstoff als Zwischenlage zwischen Innen- und Außenrohr wird insbesondere zusätzlich mit Bewehrung verstärkt, welche als Betonstabstähle oder in Form eines hohlzylindrischen Gitters im Kernwerkstoff angeordnet ist. Dabei ist vorgesehen, dass die Bewehrung stets vollständig vom Kernwerkstoff eingeschlossen und im Abstand zur Innenseite des Außenrohres und zur Außenseite des Innenrohres angeordnet ist.

Erfindungsgemäß ist demnach bei einer Gründung für eine Offshore-Windenergieanlage, mit zumindest mehreren Gründungspfählen und mit mindestens einer die oberen Enden der Gründungspfähle verbindenden Stützkonstruktion für den Turm der Windenergieanlage, vorgesehen, dass wenigstens ein Teilbereich der Gründungsstruktur eine Wandung aus mehreren Lagen unterschiedlichen Materials aufweist, wobei die Wandung aus zumindest einem Flächenstück mit einer inneren Lage und einer äußeren Lage gebildet ist, und wobei zwischen innerer und äußerer Lage als Zwischenlage der Kernwerkstoff angeordnet ist.

Mit Hilfe einer derartig erfindungsgemäßen Ausgestaltung einer zur Ausbildung von Teilbereichen der Gründungsstruktur eingesetzten Wandung kann auf vorteilhafte Weise die für die Fertigung der Gründungsstruktur benötigte Stahlmenge vorteilhaft reduziert werden. Sowohl die innere Lage als auch die äußere Lage der Wandung weisen dabei eine geringere Gesamtstärke als die sonst üblicherweise zur Ausbildung der bekannten Gründungsstrukturen benötigten Wandstärken auf. Speziell durch die Zwischenlage zwischen der inneren Lage und der äußeren Lage in Form eines Kernwerkstoffes, welcher insbesondere aus einem druckfesten Baumaterial besteht, lässt sich zudem die Festigkeit bzw. Steifigkeit der Wandung trotz der deutlich reduzierten Menge an Stahl mit Vorteil erhöhen. Dabei kann die Gesamtwandstärke der erfindungsgemäß ausgestalteten Wandung des Teilbereiches der Gründungsstruktur durch die Verwendung des Kernwerkstoffes zwischen der inneren und äußeren Lage, welche bevorzugt aus einem StahlWerkstoff ausgebildet ist, größer sein als die Wandstärke herkömmlicher Gründungsstrukturen. Trotz einer größeren Gesamtwandstärke kann die erfindungsgemäße Gründungsstruktur im Vergleich zu einer herkömmlich ausgebildeten Gründungsstruktur ein geringeres Eigengewicht aufweisen und lässt sich somit einfacher an seinen Aufstellort transportieren.

Vorzugsweise liegt die Wandstärke der äußeren und/oder inneren Lage in einem Bereich zwischen 12mm und 20mm, insbesondere in einem Bereich zwischen 14mm und 18mm, besonders bevorzugt beträgt die Wandstärke 16mm. Dabei liegt die Stärke des Kernwerkstoffs vorzugsweise in einem Bereich von 60mm bis 120mm, insbesondere in einem Bereich zwischen 70mm und 100mm, besonders bevorzugt beträgt die Stärke des Kernwerkstoffs etwa 85mm.

Mit Vorteil ist nach einer Weiterbildung der Erfindung vorgesehen, dass die innere Lage als Innenrohr und die äußere Lage als ein im Abstand zum Innenrohr verlaufendes Außenrohr ausgebildet ist. Die Verwendung eines Innenrohres und eines Außenrohres, zwischen denen bevorzugt vollständig bzw. voll umfänglich der Kernwerkstoff eingebracht ist, stellt eine konstruktiv vorteilhafte Möglichkeit zur Ausgestaltung bestimmter Bauteilbereichen der Gründungsstruktur dar. Die dabei bevorzugt zylindrische Ausgestaltung ermöglicht eine vorteilhaft gleichmäßige Lastaufnahme und Lastverteilung über die gesamte Struktur der insbesondere rohrförmigen Bauteile der Gründungsstruktur, was sich wiederum vorteilhaft auf die betriebssichere Langzeitfunktion der Gründungsstruktur auswirkt. Der Kernwerkstoff ist dabei vorzugsweise vollflächig mit der Außenseite des Innenrohres und mit der Innenseite des Außenrohres verbunden. Zwischen dem Kernwerkstoff und dem Innen- bzw. Außenrohr liegt beispielsweise eine Formschlussverbindung vor. Bei dem Kernwerkstoff kann es sich beispielsweise um einen nachträglich zwischen das Innen- und Außenrohr einbringbaren Werkstoff handeln, der allmählich aushärtet und den damit ausgerüsteten Bauteilen der Gründungsstruktur eine relativ hohe Steifigkeit verleiht.

Der zwischen die innere Lage und die äußere Lage eingebrachte Kernwerkstoff ist bevorzugt Beton, dessen Einsatz eine vorteilhafte Möglichkeit zur Ausbildung des druckfesten Kernwerkstoffes darstellt. Neben seinen vorteilhaften Eigenschaften hinsichtlich der Festigkeit, insbesondere der Druckfestigkeit, besteht die Möglichkeit, durch die Änderung in der Zusammensetzung der Ausgangsstoffe direkten Einfluss auf seine Festigkeit zu nehmen und somit eine optimale Anpassung seiner physikalischen Eigenschaften auf den jeweiligen Anwendungsfall zu gewährleisten. Durch die bevorzugte Kapselung zwischen der inneren und äußeren Lage der Wandung ist zudem eine vorteilhafte Alterungsbeständigkeit des Betons gegeben. Ein Beulen oder Knicken von derartigen Bauteilen der Gründungsstruktur mit einer erfindungsgemäß ausgebildeten Wandung ist mit Vorteil vermieden.

Der Kernwerkstoff ist insbesondere mit Bewehrung verstärkt, wodurch mit Vorteil die Zugfestigkeit des Kernwerkstoffes und somit die Belastbarkeit der Bauteile der Gründungsstruktur verbessert ist. Die insbesondere durch Wellen oder Windlasten erzeugten und auf die Gründungsstruktur oftmals dynamisch einwirkenden Kräfte lassen sich somit problemlos ohne nachteilige Einflüsse auf die Bauteilstruktur der Gründungsstruktur aufnehmen. Als Bewehrung findet beispielsweise Betonstahl in Form von Stäben Anwendung, die beispielsweise in vorgegebener Anzahl gleichmäßig über einen vorbestimmten Teilkreisdurchmesser zwischen dem Innenrohr und dem Außenrohr verteilt sind. Die als Betonstabstähle ausgebildete Bewehrung verläuft dabei parallel zur Mittenachse der insbesondere koaxial angeordneten Innen- und Außenrohre.

Einer der Teilbereiche der Gründungsstruktur ist als wenigstens ein Abschnitt mindestens eines Gründungspfahles ausgebildet, was eine vorteilhaft konstruktive Ausgestaltung eines tragenden Bauteiles der Gründungsstruktur darstellt. Durch eine derartig erfindungsgemäße Ausbildung der Gründungspfähle, welche zum einen die Last der Windenergieanlage tragen und zum anderen eine sichere Verbindung bzw. Verankerung mit dem Meeresboden gewährleisten, lässt sich eine verbesserte Festigkeit bzw. Steifigkeit selbst bei dynamischen Belastungen der Gründungsstruktur für die Offshore-Windenergieanlage erzielen. Der erfindungsgemäße Sandwich-Aufbau der Wandung der Gründungspfähle hat darüber hinaus einen vorteilhaften Einfluss auf die betriebssichere Langzeitfunktion der gesamten Gründungsstruktur. Bevorzugt weist nur ein vorbestimmter Abschnitt jedes Gründungspfahles den Sandwich-Aufbau auf, welcher sich etwa vom Niveau des Meeresbodens bis zum oberen bzw. freien Ende der Gründungspfähle erstreckt.

Mit Vorteil ist nach einer Weiterbildung vorgesehen, dass der Rammpfahl ein im Abstand unterhalb des Überdeckungsbereiches angeordnetes Schott aufweist, welches den freien, inneren Querschnitt des Rammpfahles versperrt. Mit Hilfe eines derartigen Schotts ist beim Rammen des Rammpfahles das Eindringen von Wasser oder Schlamm über den hohlzylindrisch ausgebildeten Rammpfahl in das Innere des Gründungspfahles vermieden, so das der freie Querschnitt des Rammpfahles nur bis zum Schott mit Meeresboden gefüllt ist. Des Weiteren dient das Schott als Füllgrenze für das in den Rammpfahlkopf einzufüllende Füllmaterial, welches darin aushärtet und dem Rammpfahl eine verbesserte Steifigkeit verleiht. Das Schott ist insbesondere ein Plattenkörper, welcher mit seiner Plattenebene senkrecht zur Mittenachse des Rammpfahles verläuft und umlaufend mit der Innenseite der Rammpfahlwandung abdichtend verbunden, insbesondere verschweißt, ist. Das Schott ist dabei etwa in einem Abstand unter-halb des Gründungspfahlendes angeordnet, der der Länge der Überdeckung der Pfähle entspricht.

Um einen übermäßigen Druckaufbau im Inneren des Rammpfahles und somit eine unnötige Gegenkraft beim Rammen zu vermeiden, ist eine Entlüftung aus dem Rammpfahlinneren vorzusehen. Zu diesem Zweck weist der Rammpfahl in seiner Pfahlwandung unterhalb des Schotts mindestens einen Durchbruch auf. Beim Rammen kann dementsprechend im Rammpfahl befindliche Luft entweichen, so dass die Bestandteile des Meeresbodens im freien Querschnitt des Rammpfahles bis unterhalb des Schotts aufsteigen können. Dabei ist es von Vorteil, wenn unterhalb des Schotts mehrere Durchbrüche über die Länge des Rammpfahles und gleichzeitig mehrere Durchbrüche in der Pfahlwandung auf gleichem Höhenniveau auf dem Umfang des Rammpfahles verteilt angeordnet sind. Jeder Durchbruch zur Entlüftung in der Pfahlwandung des Rammpfahles kann zudem mit einem geeigneten Material abgedichtet sein, dass sich beispielsweise beim Kontakt mit Wasser auflöst und somit die Durchbrüche in der Pfahlwandung in Längsrichtung nacheinander zur Entlüftung freigegeben.

Der Rammpfahl weist in einer optionalen Gestaltung an seiner äußeren Mantelfläche einen sich radial nach außen erstreckenden Absatz als Anschlag an der Führung des Gründungspfahles auf, mit Hilfe dem der Rammpfahl in Längsrichtung formschlüssig mit insbesondere den die Führung ausbildenden Blechen an der Innenseite des Gründungspfahles in Anlage gebracht wird und eine Haltekraft auf den Gründungspfahl senkrecht nach unten ausübt. Der sich ringförmig entlang der Mantelfläche des Rammpfahles erstreckende Absatz ist insbesondere beabstandet zum oberen Ende des Rammpfahles angeordnet, so dass stets ein bestimmter Abschnitt des Rammpfahles oberhalb der Führung frei in den Gründungspfahl hineinsteht. Dadurch ist ein Spalt zwischen Außenseite des Rammpfahles und Innenseite des Gründungspfahles erzeugt, in den dann das Füllmaterial eingegeben werden kann. Die sich radial nach außen erstreckende Umfangsfläche des Absatzes kann gleichzeitig als Führungsfläche zum Abstützen an der Innenseite des Gründungspfahles ausgebildet sein. Damit ist die Führung des Rammpfahles innerhalb des Gründungspfahles weiter verbessert und gleichzeitig ein Verlaufen des Rammpfahles beim Rammen mit Vorteil vermieden. Der Absatz kann insbesondere ein flanschartiger Ringkörper sein, welcher mit der äußeren Mantelfläche des Rammpfahles verschweißt ist.

Eine andere Weiterbildung sieht vor, dass der Rammpfahl zumindest abschnittsweise auf der Innenseite der Pfahlwandung mit Bewehrung ausgerüstet ist. Mit Hilfe der Bewehrung wird insbesondere das nachträglich eingebrachte Füllmaterial verstärkt, wobei darüber hinaus dessen Zugfestigkeit erhöht wird und somit die Belastbarkeit der Pfähle im Bereich des Meeresbodens deutlich verbessert ist. Speziell dynamisch auf die Gründungsstruktur einwirkende Kräfte lassen sich problemlos von der verstärkten Bauteilstruktur der Gründung aufnehmen. Als Bewehrung kommt insbesondere Betonstahl in Form von Stäben zum Einsatz, welche auf einem vorbestimmten Teilkreisdurchmesser beabstandet zur Innenseite des Rammpfahles angeordnet sind. An Stelle von einzelnen Stäben kann ebenfalls auch ein zylindrischer Bewehrungskorb verwendet werden, der ähnlich einem Gitternetz auf einem gleichmäßigen Radius um die Mittenachse des Rammpfahles verläuft.

Eine Weiterbildung der Erfindung sieht vor, dass neben den Gründungspfählen mindestens ein weiterer Teilbereich als wenigstens ein Rohrabschnitt eines Stabes der sich aus mehreren Stäben zusammensetzenden fachwerkartigen Stützkonstruktion ausgebildet ist. Dadurch ist auf vorteilhafte Weise ebenfalls eine erhöhte Festigkeit der die oberen Enden untereinander verbindenden fachwerkartigen Stützkonstruktion erreicht, mittels der die Windenergieanlage aufgenommen ist und eine direkte Verbindung zwischen der Gründungsstruktur und dem Turm der Windenergieanlage ausgebildet ist. Durch die erfindungsgemäße Ausbildung von Rohrabschnitten der in der Stützkonstruktion zum Einsatz kommenden Stäbe, kann die Anzahl der Stäbe, aufgrund der verbesserten Steifigkeit, verringert werden. Damit ist auch im Bereich der Stützkonstruktion bei einer gleichzeitig verbesserten Steifigkeit derselbigen auf vorteilhafte Weise eine Materialeinsparung an Stahl erzielt. Die zur Ausbildung der fachwerkartigen Stützkonstruktion eingesetzten Stäbe weisen insbesondere einen zylindrischen Querschnitt auf, wobei die erfindungsgemäße Ausgestaltung der Wandung sich sowohl über die gesamte Länge eines Stabes erstrecken kann als auch nur auf einem bestimmten Stab- bzw. Rohrabschnitt ausgebildet ist.

Vorzugsweise liegt die Wandstärke des äußeren und/oder inneren Rohres der Stäbe in einem Bereich zwischen 12mm und 30mm, insbesondere in einem Bereich zwischen 14mm und 25mm, besonders bevorzugt beträgt die Wandstärke 16mm, 20mm oder 25mm. Dabei liegt die Stärke des Kernwerkstoffs vorzugsweise in einem Bereich von 60mm bis 120mm, insbesondere in einem Bereich zwischen 70mm und 100mm, besonders bevorzugt beträgt die Stärke des Kernwerkstoffs etwa 85mm. Selbstverständlich können Innenrohr und Außenrohr verschiedene Wandstärken aufweisen.

Vorzugsweise ist jeder Rohrabschnitt an wenigstens einem seiner Endbereiche mit einem Schott ausgerüstet, welches zumindest seinen inneren freien Querschnitt abdichtend verschließt. Damit ist insbesondere das Eindringen von Feuchtigkeit in das Innere des freien Rohrabschnittes bereits vor der Montage zu einer die Gründungspfähle verbindenden Stützkonstruktion vermieden. Des Weiteren kann das Schott zusätzlich als Füllbegrenzung für ein im Bereich der erzeugten Knotenpunkte der Stützkonstruktion eingebrachtes Füllmaterial dienen. Das Schott kann in diesem Zusammenhang ein kreisförmiger Plattenkörper sein, der mit seinem Umfang mit der Innenseite des Innenrohres stoffschlüssig verbunden, beispielsweise verschweißt, sein kann.

Darüber hinaus ist vorgesehen, dass jeder Rohrabschnitt eine sein Schott endseitig überragende Bewehrung aufweist. Der beispielsweise zwischen Außen und Innenrohr des Rohrabschnittes zum Einsatz kommende Bewehrungsstahl steht dementsprechend über das Schott in einen sich möglicherweise auf beiden Seiten der Enden des Rohrabschnittes des Stabes der Stützkonstruktion ausbildenden Füllraum für darin einzubringendes Füllmaterial vor. Beim Einsatz eines aushärtenden Füllmaterials gehen dann die überstehenden Abschnitte der Bewehrung des Rohrabschnittes nach dem Abbindevorgang, eine stoffschlüssige Verbindung mit dem ausgehärteten Füllmaterial ein.

Jeder Rohrabschnitt weist an mindestens einer seiner Stirnseiten eine ringförmige Verbindungsfläche auf, welche in einer Ebene verläuft, die senkrecht zur Mittenachse des Rohrabschnittes ausgerichtet ist. Ein jeweiliger, den erfindungsgemäßen Sandwich-Aufbau aufweisender Rohrabschnitt hat demzufolge stets senkrecht zu seiner Mittenachse verlaufende, gerade Enden. Über die geraden Enden mit jeweils einer Verbindungsfläche an den Stirnseiten kann jeder erfindungsgemäße Rohrabschnitt mit den Enden eines jeweiligen Stabes ausbildenden Anschlussrohrstücken verbunden sein. Die Verbindung einer jeweils einzeln vorgefertigten Rohrabschnittes mit einem herkömmlich ausgeführten Anschlussrohrstück kann dabei vorteilhaft einfach mit Hilfe von Orbitalschweißgeräten erfolgen, wobei Rohrabschnitt und Anschlussrohrstück zur Ausbildung eines Stabes der Stützkonstruktion insbesondere miteinander verschweißt werden.

In einer Alternative oder zusätzlich dazu ist an wenigstens einem, vorzugsweise zwei, axialen Ende eines Gründungspfahles und/oder eines Stabes ein Sandwich-Anschluss angeordnet, welcher die innere Lage und die äußere Lage miteinander verbindet und in axialer Richtung eine Verlängerung des Gründungspfahles und/oder des Stabes in Form eines Anschlussrohres bildet. Vorzugsweise ist der Sandwich-Anschluss mit den die innere und äußere Lage bildenden Rohren verschweißt. So ist einerseits eine stabile Verbindung zwischen den die innere und äußere Lage bildenden Rohren und dem Ringflansch gewährleistet, andererseits ist die Zwischenlage vollständige eingeschlossen und so gegen Witterung geschützt. Zudem können an dem Sandwich-Anschluss Bewehrungen, welche zwischen der inneren und äußeren Lage angeordnet sind, befestigt sein. Eine derartige Bewehrung kann beispielsweise aus Stahlstäben bestehen, die sich parallel zu einer Längsachse der Rohre zwischen diesen erstrecken. Die Stahlstäbe sind dann vorzugsweise von zwei an den gegenüberliegenden Enden der Rohre angeordneten Sandwich-Anschlüssen befestigt, insbesondere mit diesen verschweißt oder verschraubt. So ist eine Zugkraft verbesserter mittels des als Sandwich-Rohr ausgebildeten Stabes übertragbar. Insbesondere Beton, der als Zwischenlage eingebracht ist, eignet sich für die Übertragung von Druckkräften, ist jedoch weniger gut für die Übertragung von Zugkräften geeignet. Indem zwischen den an gegenüberliegenden Enden der Stäbe angeordneten Sandwich-Anschlüssen Bewehrungsstäbe befestigt sind, sind höhere Zugkräfte übertragbar.

Der Sandwich-Anschluss bildet eine axiale Verlängerung des Gründungspfahles und/oder des Stabes. Diese Verlängerung entspricht vorzugsweise der Form eines Anschlussrohres. Der Durchmesser des Anschlussrohres entspricht vorzugsweise dem mittleren Durchmesser des als Sandwichrohr ausgebildeten Rohrabschnitts. Mittels eines derartigen Anschlussrohres sind die Gründungspfähle und/oder die Stäbe auf vorteilhafte Art und Weise mit weiteren Stäben zu einer Stützkonstruktion verbindbar bzw. die Gründungspfähle sind mit der Stützkonstruktion verbindbar. Ein derartiges Verbinden ist besonders einfach mittels Orbitalschweißen möglich. Dazu können beispielsweise zwei Anschlussrohre stumpf aneinandergefügt werden und die Verbindungsstelle mittels Orbitalschweißen verbunden werden. So kann eine Gründungsstruktur, die beispielsweise Gründungspfähle und eine Stützkonstruktion in Form einer Jacket-Struktur aufweist, aus einzelnen Sandwich-Rohren zusammengesetzt werden, wobei die einzelnen Sandwich-Rohre mittels der Anschlussrohre auf herkömmliche Art und Weise miteinander verbindbar sind. Bekannte Probleme, die beim Verbinden von Sandwich-Rohren auftreten können, werden so vermieden. Insbesondere sind die einzelnen Verbindungsstellen bzw. Schweißpunkte zwischen zwei Rohren auf einfacher berechenbar.

Vorzugsweise weist der Sandwich-Anschluss einen in einem Querschnitt im Wesentlichen konischen Ringflansch auf, wobei der Ringflansch an einem Ende mit der inneren Lage und der äußeren Lage und mit dem anderen Ende mit einem Anschlussrohr verbunden ist. Ein derartiger Ringflansch ist beispielsweise mittels Walzen herstellbar. Dies ist ein verbreitetes Herstellungsverfahren, wodurch die Kosten für eine Gründungsstruktur verringert sind. Der Ringflansch weist an seinem breiteren Ende vorzugsweise eine Stärke auf, die im Wesentlichen der Stärke des Sandwich-Abschnitts des Rohres oder des Stabes entspricht. Die Stärke entspricht vorzugsweise etwa der Differenz zwischen dem Außendurchmesser des äußeren Rohres und dem Innendurchmesser des inneren Rohres. Das schmalere Ende des Ringflansches ist mit einem massiven Anschlussrohr verbindbar. Das massive Anschlussrohr weist vorzugsweise einen Durchmesser auf, der dem mittleren Durchmesser des Sandwichrohres entspricht. Die Stärke des Anschlussrohres ist entsprechend der Belastung zu wählen. Die Stärke des schmaleren Endes des Ringflansches ist an die Stärke des Anschlussrohres angepasst.

Ferner ist bevorzugt, dass der Ringflansch Ausnehmungen zur Aufnahme von Bewehrungsstäben aufweist. Vorzugsweise sind die Ausnehmungen als Durchgangslöcher ausgebildet. Die Ausnehmungen sind vorzugsweise gleichmäßig um einen Umfang des Ringflansches angeordnet. Die Ausnehmungen haben einen derartigen Durchmesser, dass Bewehrungsstäbe durch diese hindurchsteckbar sind. Vorzugsweise sind die Bewehrungsstäbe mit dem Ringflansch verschweißt.

In einer bevorzugten Ausführungsform in der Gründungsstruktur weist diese wenigstens einen Verbindungskörper auf, der zwei oder mehr Anschlussrohre aufweist, zum Verbinden, insbesondere Verschweißen, mit Anschlussrohren bzw. Sandwich-Anschlüssen jeweils eines Gründungspfahles und wenigstens eines Stabes der Stützkonstruktion. Die Stäbe der Stützkonstruktion werden meist nicht koaxial zu den Gründungspfählen an diesen befestigt, sondern weisen vorbestimmte Winkel auf. So weist eine Stützkonstruktion häufig so genannte Querriegel auf, die im Wesentlichen senkrecht zu den Gründungspfählen ausgerichtet sind und diese miteinander verbinden, sowie schräg angeordnete Stäbe, die den Gründungspfahl mit einer Zentralaufnahme für den Turm einer Windenergieanlage verbinden. Der Verbindungskörper ist vorzugsweise derart ausgestaltet, dass seine Anschlussrohre entsprechende Winkel aufweisen, so dass sie stumpf mit den Anschlussrohren des Gründungspfahls und der Stäbe verbindbar sind, um mit diesen vorzugsweise mittels Orbitalschweißen verbunden zu werden.

Vorzugsweise ist dieser Verbindungskörper aus vormontierten Rohrstücken gebildet. Diese Rohrstücke können beispielsweise miteinander verschweißt sein und entsprechende Winkel zueinander aufweisen, so dass die Stäbe und die Gründungspfähle in entsprechenden Winkeln zueinander miteinander verbunden werden können. Ein derartiger Verbindungskörper ist eine einfache Möglichkeit, die Stäbe und die Gründungspfähle in den richtigen Winkeln und Abständen zueinander miteinander zu verbinden, insbesondere zu verschweißen, insbesondere mittels Orbitalschweißen zu verbinden. Der Verbindungskörper, welcher wesentlich kleinere Abmaße als die Stäbe, die Stützkonstruktion oder die Gründungspfähle aufweist, kann vormontiert werden. Diese Vormontage ist aufgrund der kleineren Abmaße einfach und die entsprechenden Winkel zwischen den Rohrstücken können auf bekannte Art und Weise eingestellt werden. Beim Verbinden der Stäbe, der Stützkonstruktion und der Gründungspfähle miteinander müssen dann nur noch die Anschlussrohre der Stäbe und Gründungspfähle mit dem Verbindungskörper stumpf aneinandergepasst werden und es müssen keine speziellen Winkelmaße mehr vorgesehen werden. Dadurch ist die Fertigung der Gründungsstruktur vereinfacht und die Kosten werden reduziert.

Eine andere Weiterbildung der Erfindung sieht vor, dass jeder Rohrabschnitt mit parallel zu seiner Mittenachse wirkenden Spannelementen ausgerüstet ist, welche zum Überspannen mindestens eines im Verbindungsbereich zweier Bauteile der Gründungsstruktur ausbildenden Knotenpunktes vorgesehen sind. Die Verwendung von Spannelementen im Bereich eines Knotenpunktes hat den Vorteil, dass ein jeweiliger, erfindungsgemäßer Rohrabschnitt mittels der insbesondere als Spannstäbe ausgebildeten Spannelemente in Richtung eines Knotenpunktes gezogen wird. Sich im Stauchungsbereich befindliche Schweißnähte sind somit verringerten Lastwechseln ausgesetzt, wodurch gleichzeitig deren Ermüdungsverhalten mit Vorteil verringert ist. An einem Rohrabschnitt kommen eine Vielzahl von Spannstäben zum Einsatz, welche gleichmäßig auf einem Teilkreisdurchmesser nahe der Rohrwandung des Rohrabschnittes angeordnet sind. Dadurch ist stets eine vorteilhafte Krafteinleitung im Bereich der Knotenpunkte sichergestellt. Die Spannstäbe können beispielsweise mit ihrem kopfseitigen Ende an einem Schott in einem jeweiligen Endbereich des Rohrabschnittes angeordnet sein. Die dabei bevorzugt als Spannstäbe ausgebildeten Spannelemente erstrecken sich ebenfalls parallel zur Mittenachse eines jeweiligen Stabes der Stützkonstruktion bis zum Beispiel in einem Rohrabschnitt eines unter einem Winkel dazu verlaufenden Stabes oder eines Gründungspfahles hinein.

Ausführungsbeispiele der Erfindung, aus denen sich weitere erfinderische Merkmale ergeben, ist in der Zeichnung dargestellt. Es zeigen:

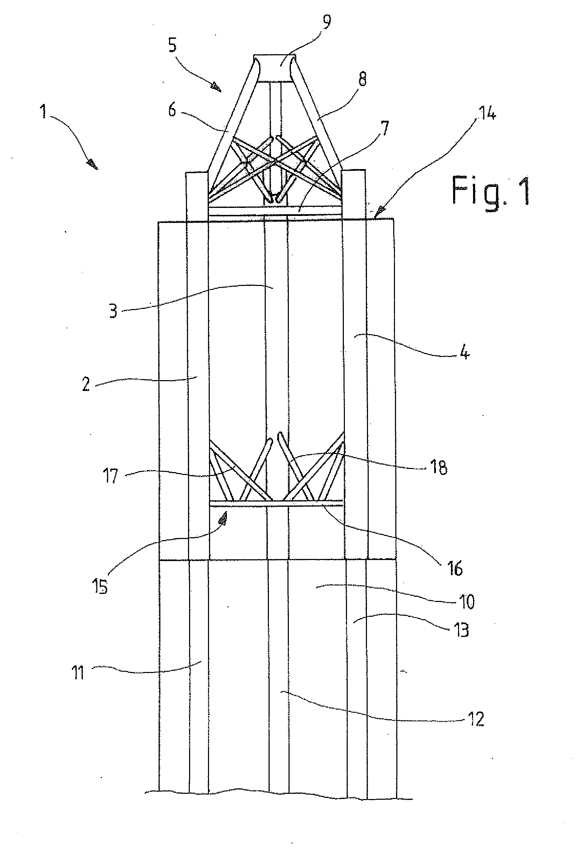

Fig. 1: eine Ansicht einer Gründungsstruktur,
Fig. 2: eine Ansicht eines Teilabschnittes eines zur Verankerung im Meeresboden verwendeten Gründungspfahles und des darin geführten Rammpfahles im Schnitt,
Fig. 3: eine Teilansicht eines Abschnitts einer der Gründungspfähle und der Stützkonstruktion im Schnitt gemäß einem ersten Ausführungsbeispiel,
Fig. 4 eine weitere Teilansicht eines Abschnitts einer der Gründungspfähle und der Stützkonstruktion mit einem Verbindungskörper im Schnitt gemäß einem weiteren Ausführungsbeispiel,
Fig. 5 eine Detailansicht eines Ringflansches mit Sandwich-Rohranschluss, und
Fig.6 eine Vollschnitt-Gesamtansicht eines Gründungspfahls mit Sandwich-Anschlüssen.

Mit 1 ist eine Gründungsstruktur für ein Wasserbauwerk bezeichnet, insbesondere für eine Offshore-Windenergieanlage, welche drei senkrecht verlaufende Gründungspfähle 2, 3, 4 und eine Stützkonstruktion 5 mit einer Vielzahl von Stäben 6, 7, 8 und mit einer Zentralaufnahme 9 für den Turm der nicht dargestellten Windenergieanlage aufweist. Die Gründungspfähle 2, 3, 4 stehen auf dem Meeresboden 10 auf, aus denen fest damit verbundene Rammpfähle 11, 12, 13 zur Verankerung im Meeresboden herausragen. Um eine sichere Verankerung zu gewährleisten, weisen die Rammpfähle 11 bis 13 einen in den Meeresboden gerammten Abschnitt auf, der etwa der Wassertiefe am Aufstellort entspricht. Die Stützkonstruktion 5 verbindet gleichzeitig die oberen bzw. freien Enden der Gründungspfähle 2, 3, 4 oberhalb der Wasserlinie 14 untereinander, so dass durch Wind- und Wellenlasten auf die Gründungsstruktur 1 oder die Windenergieanlage wirkende Kräfte vorteilhaft auf alle drei Gründungspfähle 2 bis 4 und deren Rammpfähle 11 bis 13 verteilt werden. Zusätzlich ist in einer vorbestimmten Wassertiefe oberhalb des Meeresbodens 10 eine zweite Stützkonstruktion 15 mit Stäben 16, 17, 18 vorgesehen, welche die drei Gründungspfähle 2 bis 4 während des Verbringens an den Aufstellort oder während des Rammens vorteilhaft zueinander fixiert. Sowohl die Gründungspfähle 2 bis 4 und die Rammpfähle 11 bis 13 als auch die Pfosten bzw. Stäbe 6 bis 8 der Stützkonstruktion 5 weisen vorzugsweise eine zylindrische Ausgestaltung auf.

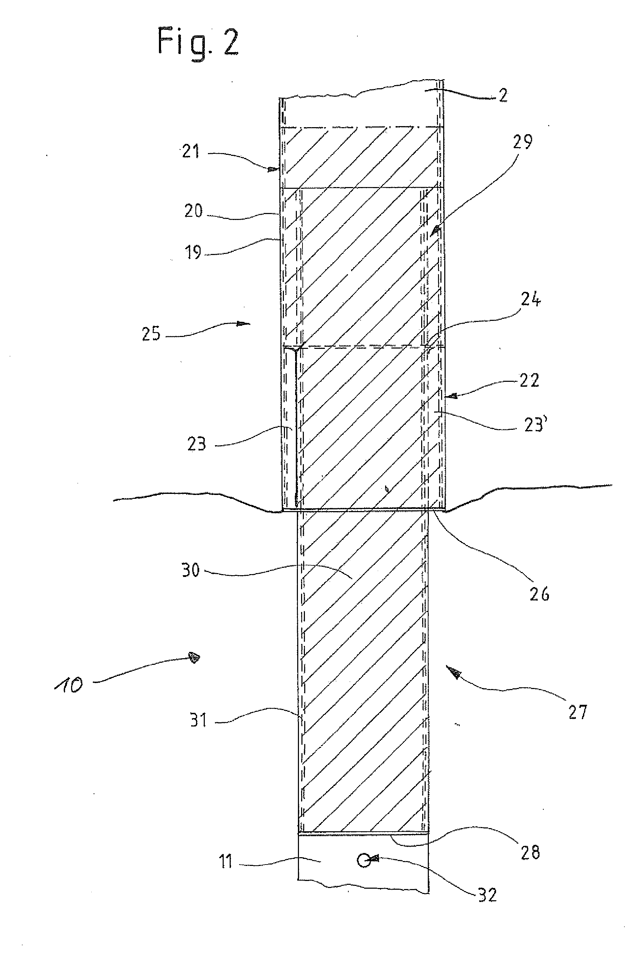

Fig. 2 zeigt eine Teilansicht eines der Gründungspfähle 2 bis 4 mit einem der darin aufgenommenen Rammpfähle 11 bis 13 im Schnitt und soll insbesondere deren Aufbau näher verdeutlichen. Jeder der Gründungspfähle 2 bis 4 weist eine Wandung aus mehreren Lagen 19, 20, 21 unterschiedlichen Materials auf. Zwischen der inneren, bevorzugt metallischen Lage 19 und der äußeren, metallischen Lage 20 ist eine Zwischenlage 21 aus einem Kernwerkstoff, wie zum Beispiel Beton, eingebracht. Jeder Gründungspfahl 2 bis 4 weist in seinem Fußbereich eine seinen freien Querschnitt an der inneren Mantelfläche verringernde Führung 22 für den Rammpfahl 11 auf, wodurch das Verlaufen der Rammpfähle 11 bis 13 während des Rammens vermieden ist. Die Führung ist dabei mittels vier, an der inneren Lage 19 eines Gründungspfahles 2 bis 4 angeordneten Blechen 23, 23' ausgebildet, die in einem Winkel von 90 Grad zueinander an der Innenseite der inneren Lage in Längsrichtung verlaufen und sich radial nach innen erstrecken. Zur Ausbildung einer stabilen Endlage der Rammpfähle 11 bis 13 in einem jeweiligen Gründungspfahl 2 bis 4 ist an der Außenseite jedes Rammpfahls 11 bis 13 in einem vorbestimmten Abstand unterhalb des oberen Endes ein ringförmiger Anschlag 24 vorgesehen, der auf den oberen Enden der Bleche 23, 23' der Führung 22 zu liegen kommt, so dass Abschnitte der beiden Pfähle 2 bis 4 und 11 bis 13 zueinander einen Überdeckungsbereich 25 einer vorbestimmten Länge ausbilden. Dieser Anschlag 24 kann ebenso entfallen. An der Unterseite jedes Gründungspfahles 2 bis 4 ist des Weiteren ein Bodenring 26 mit einer Dichtung zum Abdichten des Führungsspaltes zum Rammpfahl 11 bis 13 vorgesehen. Auch diese Dichtung kann je nach Anwendung entfallen. Sie ist für die Erfindung nicht erforderlich. Jeder Rammpfahl 11 bis 13 weist einen abgegrenzten Rammpfahlkopf 27 auf, der von einem Schott 28 begrenzt ist, welches von dessen oberen Ende in einem etwa die doppelte Länge des Überdeckungsbereiches 25 betragenden Abstand dessen freien, inneren Querschnitt versperrend angeordnet ist. Sowohl der Rammpfahlkopf 27 oberhalb des Schotts 28 als auch der Spalt 29 zwischen der Außenseite des Rammpfahles 11 bis 13 und der Innenseite des Gründungspfahles 2 bis 4 sowie das Teilstück des Gründungspfahles 2 bis 4 oberhalb des Überdeckungsbereiches 25 sind mit einem aushärtenden Füllmaterial 30 verfüllt. Zur Verbesserung der Zugfestigkeit des Füllmaterials 30 ist zumindest abschnittsweise auf der Innenseite der Rammpfahlwandung eine Bewehrung 31 aus beispielsweise Stäben angeordnet. Jeder Rammpfahl 11 bis 13 weist des Weiteren unterhalb des Schotts 28 mindestens einen Durchbruch 32 in seiner Pfahlwandung zur vorteilhaften Entlüftung während des Rammens in den Meeresboden 10 auf.

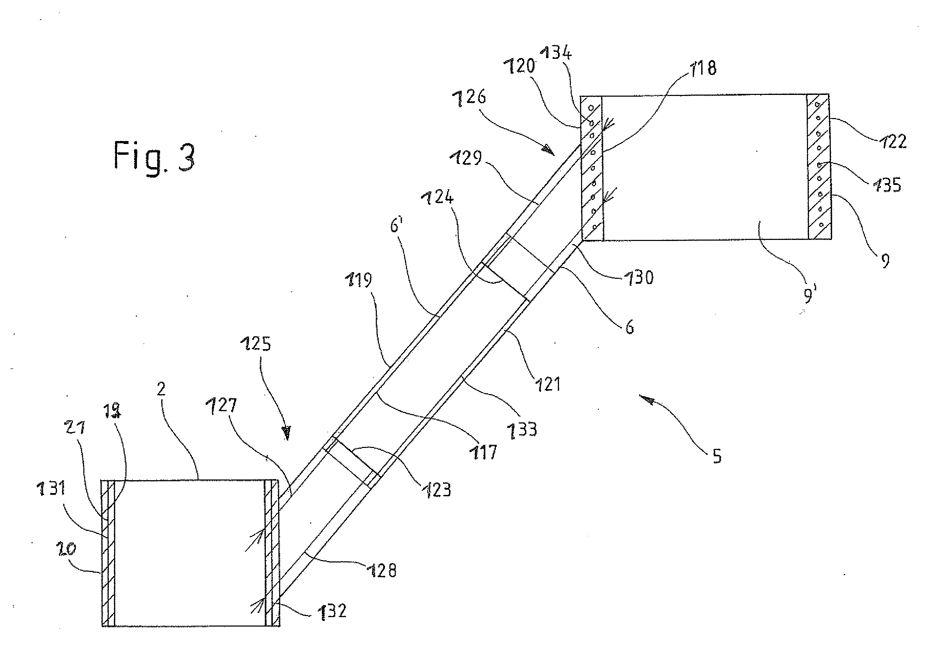

Fig. 3 zeigt eine Teilansicht eines der Gründungspfähle 2 bis 4 und der Stützkonstruktion 5 mit einem Stab 6 und der Zentralaufnahme 9 im Schnitt und soll insbesondere deren Aufbau verdeutlichen. Jeder der Gründungspfähle 2 bis 4 weist eine Wandung aus mehreren Lagen 19, 20, 21 unterschiedlichen Materials auf, wobei die Wandung insbesondere eine metallische, innere Lage 19 und eine metallische, äußere Lage 20 aufweist. Zwischen der inneren Lage 19 und der äußeren Lage 20 ist eine Zwischenlage 21 aus einem Kernwerkstoff, vorzugsweise Beton, eingebracht. Ebenso weist auch zumindest ein Abschnitt eines Stabes 6 der Stützkonstruktion 5, sowie die Zentralaufnahme 9 der Stützkonstruktion 5 für den Turm der Windenergieanlage einen Rohrabschnitt 6',9' mit einer inneren Lage 117, 118 und einer äußeren Lage 119, 120 auf. Auch hier ist zwischen den inneren Lagen 117, 118 und den äußeren Lagen 119, 120 eine Zwischenlage 121, 122 aus Beton eingefüllt. Vorzugsweise ist jede innere Lage 19, 117, 118 als Innenrohr ausgebildet und jede äußere Lage 20, 119, 120 ist als ein im Abstand zum Innenrohr verlaufendes Außenrohr ausgebildet. Innenrohr und Außenrohr sind dabei vorzugsweise koaxial zueinander angeordnet und insbesondere der Spalt bzw. Zwischenraum zwischen Innenrohr und Außenrohr vollständig mit Beton als Kernwerkstoff ausgefüllt.

Zur Verbesserung der Festigkeit der aus einem Kernwerkstoff ausgebildeten Zwischenlage 21, 121, 122 jedes Gründungspfahles 2 bis 4, jedes Stabes 6 bis 8 und der Zentralaufnahme 9 der Stützkonstruktion 5 ist der Kernwerkstoff mit Bewehrung verstärkt. Als Bewehrung kommen insbesondere Betonstabstähle 131, 132, 133, die in den Gründungspfählen 2 bis 4 und den Stäben 6 bis 8 der Stützkonstruktion 5 jeweils parallel zu deren Mittenachsen verlaufen, wohingegen als Bewehrung in der Zentralaufnahme 9 der Stützkonstruktion 5 ringförmige Stäbe 134, 135 zwischen der inneren Lage 118 und der äußeren Lage 120 der Wandung der Zentralaufnahme 9 angeordnet sind.

Der Rohrabschnitt 6' weist an seinen Endbereichen ein plattenförmig ausgebildetes Schott 123, 124 auf, das den Innenraum des Rohrabschnittes 6' abdichtet. Die Bewehrung des Rohrabschnittes 6' erstreckt sich über ein jeweiliges Schott 123, 124 hinaus, so dass nach erfolgter Montage der Stützkonstruktion in die als Knotenpunkte 125, 126 ausgebildeten Verbindungsbereiche zweier Bauteile des Wasserbauwerkes, wie beispielsweise den Gründungspfählen bzw. der Zentralaufnahme, Beton eingefüllt werden kann. Darüber hinaus sind im Bereich der Knotenpunkte 125, 126 eine Vielzahl von Spannelementen 127, 128, 129, 130 vorgesehen, welche beispielsweise kopfseitig mit einem jeweiligen Schott 123, 124 eines Rohrabschnittes 6' des Stabes 6 verbunden sind und jeweils stets die innere Lage 19, 118 beispielsweise eines jeweiligen Gründungspfahles 2 bis 4 oder der Zentralaufnahme 9 hineinragen. Jedes Spannelement 127 bis 130 wird insbesondere über ein Verbindungselement, wie zum Beispiel eine Schraubenmutter mit der jeweiligen inneren Lage 19, 118 kraftschlüssig verbunden. An den Durchführungen für die Spannelemente 127 bis 130 in einem jeweiligen Gründungspfahl 2 bis 4 und dem Zentralrohr 9 Buchsen zwischen innerer Lage 19, 118 und äußerer Lage 20, 119 der jeweiligen Wandung vorgesehen sein können. Dadurch wird ein Ausbeulen der Wandung in den Knotenpunkten 125, 126 vermieden. Mit Hilfe der Spannelemente 127 bis 130 lassen sich insbesondere überspannte Verbindungen im Bereich der Knotenpunkte 125, 126 schaffen, wodurch die Lastwechsel zwischen Druck- und Zugkräften an den Schweißnähten der Gründungspfähle 2 bis 4 bzw. der Zentralaufnahme 9 und den unter einem vorbestimmten Winkel dazu verlaufenden Stäben 6 bis 8 der Stützkonstruktion 5 vorteilhaft reduziert sind. Ähnlich wie die Stützkonstruktion 5 kann auch die in einer vorbestimmten Wassertiefe zwischen den Gründungspfählen 2 bis 4 ausgebildete Stützkonstruktion 15 mit den erfindungsgemäß ausgebildeten Rohrabschnitten ausgerüstet sein.

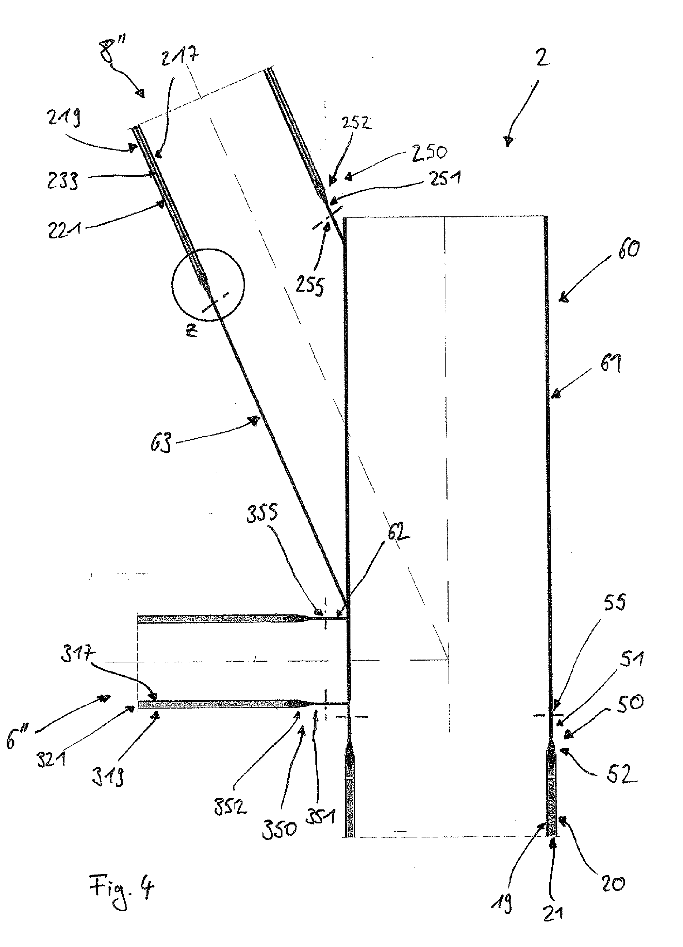

In Fig. 4 ist ein Gründungspfahl 2, ein Stab 6" und ein Stab 8" gezeigt, welche mittels eines Verbindungskörpers 60 miteinander verbunden sind. Gleiche und ähnliche Elemente sind mit gleichen bzw. um 100, 200 oder 300 heraufgesetzten Bezugszeichen versehen. Insoweit wird vollumfänglich auf die obige Beschreibung Bezug genommen.

Der Gründungspfahl 2 weist ein die innere Lage 19 bildendes inneres Rohr auf, welches konzentrisch in einem die äußere Lage 20 bildenden äußeren Rohr angeordnet ist. In dem Zwischenraum zwischen den beiden Lagen 19, 20 ist eine Zwischenlage 21 angeordnet, welche hier als Beton ausgebildet ist. Am oberen Ende des Gründungspfahls 2 ist ein Sandwich-Anschluss 50 angeordnet. Axial nach oben gerichtet (auf Fig. 4 bezogen) weist der Sandwich-Anschluss 50 einen Ringflansch 52 und ein zylindrisches Anschlussrohr 51 auf. In diesem Ausführungsbeispiel weist der Gründungspfahl einen Außendurchmesser von etwa 3000 mm auf. Die innere Lage 19 und die äußere Lage 20 weisen eine Wandstärke von 16 mm auf und die Zwischenlage eine Stärke von 85,5 mm. Die beiden Stäbe 6" und 8" sind auf ähnliche Weise gebildet. Der Stab 6" weist ein die innere Lage 317 bildendes inneres Rohr auf, welches konzentrisch in einem die äußere Lage 319 bildenden äußeren Rohr angeordnet ist. Zwischen den beiden Lagen 317, 319 ist eine Zwischenlage 321 angeordnet, welche hier aus Beton ausgeführt ist. An einem axialen Ende des Stabes 6" (auf der rechten Seite auf Fig. 4 bezogen) weist der Stab 6" einen Sandwich-Anschluss 350 auf, welcher die beiden Lagen 319, 321 verbindet. Axial nach rechts gerichtet (auf Fig. 4 bezogen) weist der Sandwich-Anschluss 350 einen Ringflansch 352 und ein Anschlussrohr 351 auf. Der Stab 6" hat in diesem Ausführungsbeispiel einen Außendurchmesser von etwa 1100 mm. Die Stärke der äußeren Lage 319 ist 16 mm, die Stärke der inneren Lage 317 ist ebenfalls 16 mm. Die Zwischenlage 321 hat eine Stärke von 86 mm. Der Stab 8" weist ein die äußere Lage 219 bildendes äußeres Rohr auf, in welchem ein die innere Lage 217 bildendes inneres Rohr konzentrisch angeordnet ist. Zwischen den beiden Lagen 217, 219 ist eine Zwischenlage 221 angeordnet, welche aus Beton ausgebildet ist. In der Zwischenlage 221 sind Betonstahlstäbe 233 angeordnet, zur Verstärkung des Stabes 8". Die Betonstahlstäbe 233 sind mit einem Ringflansch 252 des Sandwich-Anschlusses 250 verbunden, der an einem axialen Ende des Stabes 8" die innere Lage 217 und äußere Lage 219 miteinander verbindet. Der Sandwich-Anschluss 250 weist ein eine axiale Verlängerung bildendes Anschlussrohr 251 auf. In diesem Ausführungsbeispiel hat der Stab 8" einen Außendurchmesser von etwa 2000 mm. Während die äußere Lage 219 eine Stärke von 20 mm hat, hat die innere Lage 217 eine Stärke von 25 mm. Die Zwischenlage hat eine Stärke von 81,5 mm.

Der Verbindungskörper 60 besteht gemäß diesem Ausführungsbeispiel aus drei Rohrstücken 61, 62, 63. Diese sind in entsprechenden, vorbestimmten Winkeln miteinander verbunden, so dass der Gründungspfahl 2 und die beiden Stäbe 6" und 8" vorteilhaft miteinander verbindbar sind. Gemäß diesem Ausführungsbeispiel sind die Rohrstücke 61, 62, 63 mit den Anschlussrohren 51, 251, 351 mittels Orbitalschweißnähten 55, 255, 355 miteinander verbunden. Natürlich kann auch jede andere Verbindung genutzt werden, jedoch ist Orbitalschweißen sehr vorteilhaft, da dazu einfach bedienbare Schweißapparate einsetzbar sind. Indem die als Sandwich-Rohre ausgebildeten Stäbe 6" und 8" mit den Sandwich-Anschlüssen 250, 350, vorzugsweise an beiden Enden, ausgerüstet sind, die jeweils ein Anschlussrohr 251, 351 aufweisen, sind diese wie herkömmliche Rohre mit weiteren Rohren und dergleichen verbindbar. Die Berechnung der Verbindung kann auf bekannte herkömmliche Weise geschehen, wodurch die Komplexität bei der Konstruktion, Wartung und bautechnischen Beurteilung wesentlich verringert ist. Berechnungsverfahren, die für Offshore-Gründungsstrukturen genormt oder zugelassen sind, können weitestgehend unverändert angewandt werden.

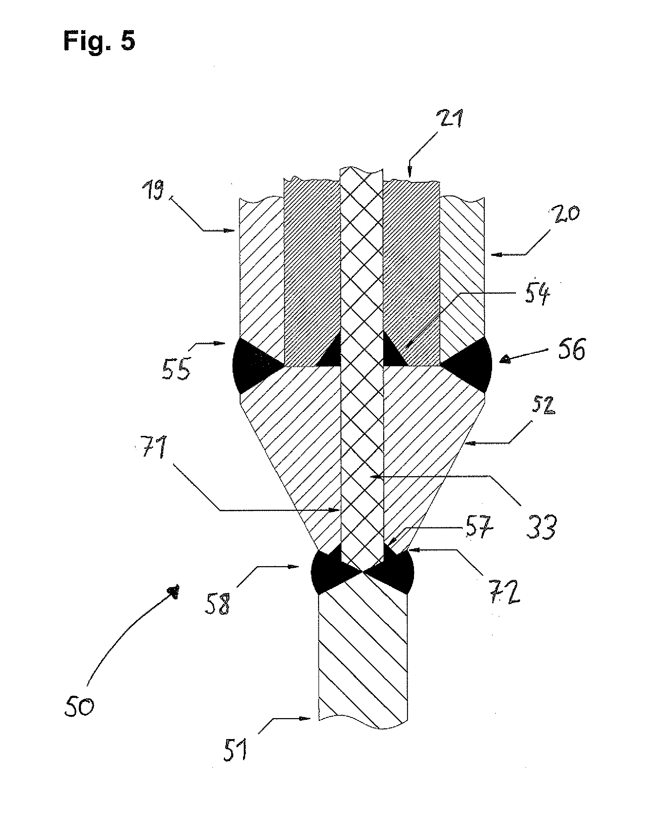

Der Sandwich-Anschluss 50 (Fig. 5; die Sandwich-Anschlüsse 250, 350 sind ebenso gestaltet) besteht aus einem kurzem Stahlring, bezeichnet als Ringflansch 52, der zu einem Ende in seinem Querschnitt konisch ausgeformt wurde. An der Seite, die an das am Ringflansch 52 befestigte massive Anschlussrohr 51 durch eine Schweißnaht 58 anschließt, wird durch den konischen Querschnitt die Stärke des massiven Anschlussrohres 51 erreicht. Das andere Ende des Ringflansches 52 nimmt in regelmäßigen Abständen über seinen gesamten Umfang die Bewehrungsstäbe 33 auf, die durch eine vorgebohrte Ausnehmungen 71 zur anderen Seite des Ringflansches 52 geführt werden.

Zunächst wird vorzugsweise beim Zusammenbau eines kompletten Gründungspfahles 2, 3, 4 (siehe weitere Figuren) der Ringflansch 52 mit dem inneren Rohr 19 des Gründungspfahls durch eine Schweißnaht 55 verbunden. Danach werden die Bewehrungsstäbe 33 nacheinander in die Ausnehmungen 71 eingeführt und jeweils auf beiden Seiten des Ringflansches mittels Schweißnähten 54, 57 mit diesem verbunden. Nun wird das äußere Rohr 20 des Gründungspfahls über das innere Rohr 19 und die Bewehrungsstäbe 33 geführt und mit dem schon am inneren Rohr 19 befestigten Ringflansch 52 durch eine Schweißnaht 56 verbunden.

Der zweite, an dem axial gegenüberliegenden Ende des Stabes oder des Rohres angeordnete Ringflansch (in den Figuren nicht gezeigt) wird über die Bewehrungsstäbe 33, die am anderen Ende eine Überlänge aufweisen, an das innere Rohr 19 und das äußere Rohr 20 herangeführt. Zunächst werden die beiden Rohre 19, 20 mit dem zweiten Ringflansch verschweißt. Danach wird durch eine hier nicht dargestellte Zugvorrichtung jeder noch nicht fixierte Bewehrungsstab 33 unter eine vorausberechnete Zugspannung gesetzt und an dem äußeren Ende 57 sorgfältig verschweißt.

Anschließend erfolgt vorzugsweise das Abschneiden der überstehenden Enden der Bewehrungsstäbe 33 an den Schweißstellen 57. Diese werden zusammen mit den Überständen durch Abschleifen der Form der Auskehlung 72 für Schweißnähte sorgfältig angepasst.

Als nächster Schritt wird das Innere zwischen den beiden Rohren 19, 20 mit Beton als Zwischenlage 21 soweit befüllt, bis keine Luftblasen im Inneren mehr vorhanden sind. Der Beton wird dementsprechend vorzugsweise sehr dünnflüssig gehalten, um gute Fließ- und Fülleigenschaften zu erhalten. Der gesamte Gründungspfahl 2, 3, 4 wird während des Befüllungsvorganges bevorzugt senkrecht aufgerichtet. Alternativ ist es möglich den Gründungspfahl 2, 3, 4 in einem Winkel von 5° bis 10° zur Horizontalen auf einem Drehrohrgestell zu lagern und entlang seiner Längsachse beim Befüllen langsam rotieren zu lassen. Die Wahl der Methode ist abhängig vom Platzangebot und den Möglichkeiten der Produktionsstätte.

Die Verbindungsknoten mittels der Sandwich-Anschlüsse 50, 250, 350 und des Verbindungskörpers 60 sind auf konventionelle und erprobte Weise zu berechnen und zu fertigen. Damit werden Probleme bei der Zulassung von neuartigen und nicht erprobten Bauverfahren vermieden. Die von den zertifizierenden Institutionen verwendeten Bewertungskriterien für kritische Bauteile bei Kraft übertragenden Gründungsstrukturen können weiterhin angewendet werden.

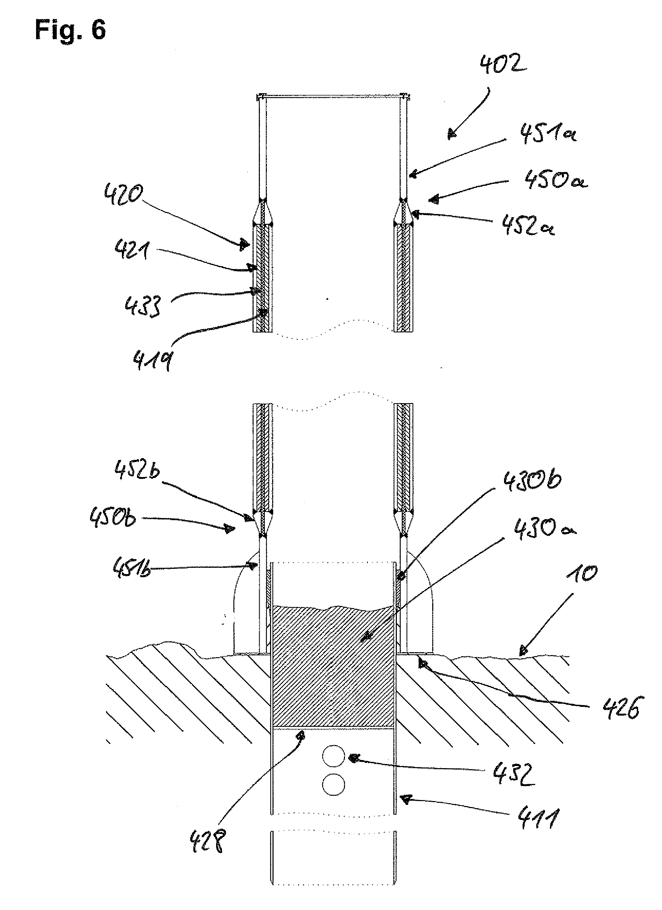

Figur 6 zeigt einen Gründungspfahl 402 in einem Vollschnitt. Gleiche und ähnliche Bezugszeichen sind mit um 400 heraufgesetzten Bezugszeichen versehen, insofern wird vollumfänglich auf die obige Beschreibung Bezug genommen. Der Gründungspfahl 402 ist als Sandwich-Pfahl ausgebildet und weist ein die innere Lage 419 bildendes inneres Rohr, ein die äußere Lage 420 bildendes äußeres Rohr auf. An jeweils axialen Enden des inneren und äußeren Rohres 419, 420 ist jeweils ein Sandwich-Anschluss 450a, 450b angeordnet. Der Sandwich-Anschluss 450a, 450b weist einen im Querschnitt konisch geformten Ringflansch 452a, 452b auf, der das innere und äußere Rohr 419, 420 miteinander verbindet. Auf der anderen Seite ist der Ringflansch 452a, 452b mit einem Rohranschluss 451 a, 451 b verbunden, der als massives Rohr ausgebildet ist. In dem Zwischenraum zwischen den Rohren 419, 420 sind Bewehrungsstäbe 433 angeordnet, die sich entlang der Längsachse erstrecken und durch Ausnehmungen in den Ringflanschen 452a, 452b sich hindurch erstrecken. Diese Bewehrungsstäbe 433 sind ebenfalls mit den Anschlussrohren 451 a, 451 b verbunden.

Der Gründungspfahl 402 ist auf dem Meeresboden 10 aufgestellt. Im Inneren des Gründungspfahls 402 ist ein Rammpfahl 411 angeordnet, der in der Nähe seines Kopfendes ein Schott 428 aufweist und zwei unter dem Schott 428 angeordnete Entlüftungsöffnungen 432. Der obere Bereich des Rammpfahls 411 ist mit Beton 430a verfüllt. Vorzugsweise ist Beton 430a zu einer Höhe eingefüllt, die etwa zwei Mal dem Durchmesser des Rammpfahls 411 entspricht. Auch in dem Zwischenraum zwischen dem Rammpfahl 411 und dem Gründungspfahl 402 ist Beton 430b eingefüllt, um eine feste Verbindung zwischen den beiden Pfählen 402, 411 zu bilden.

## Patentansprüche

1. Gründungsstruktur (1) für eine Offshore-Windenergieanlage, mit mehreren, insbesondere drei, Gründungspfählen (2, 3, 4) und einer die oberen Enden der Gründungspfähle (2, 3, 4) verbindenden Stützkonstruktion (5) für den Turm der Windenergieanlage,
**dadurch gekennzeichnet, dass** jeder Gründungspfahl (2, 3, 4) im Wesentlichen über seine gesamte Länge eine Wandung aus mehreren Lagen (19, 20, 21) unterschiedlichen Materials aufweist, wobei die Wandung aus zumindest einem Flächenstück mit einer inneren Lage (19) und einer äußeren Lage (20) gebildet ist, und wobei zwischen innerer Lage (19) und äußerer Lage (20) als Zwischenlage (21) ein Kernwerkstoff angeordnet ist.

2. Gründungsstruktur nach Anspruch 1, **dadurch gekennzeichnet, dass** die innere Lage (19) als Innenrohr und die äußere Lage (20) als ein im Abstand zum Innenrohr (19) verlaufendes Außenrohr (20) ausgebildet ist.

3. Gründungsstruktur nach Anspruch 2, **dadurch gekennzeichnet, dass** der Kernwerkstoff Beton ist.

4. Gründungsstruktur nach Anspruch 2 oder 3, **dadurch gekennzeichnet, dass** der Kernwerkstoff mit Bewehrung (131, 132) verstärkt ist.

5. Gründungsstruktur nach einem der vorstehenden Ansprüche,
**dadurch gekennzeichnet, dass** die Gründungspfähle (2, 3, 4) eine axiale Länge derart aufweisen, dass diese an einem Aufstellungsort vom Meeresboden (10) bis über eine Wasseroberfläche (14) reichen.

6. Gründungsstruktur nach einem der vorstehenden Ansprüche,
**dadurch gekennzeichnet, dass** der Gründungspfahl (2, 3, 4) einen Durchmesser in einem Bereich zwischen 2500mm und 3500mm aufweist, bevorzugt etwa 3000mm beträgt, die innere Lage (19) und/oder die äußere Lage (10) eine Wandstärke in einem Bereich zwischen 12mm und 20mm, aufweist und die Stärke des Kernwerkstoffs vorzugsweise in einem Bereich von 60mm bis 120mm liegt.

7. Gründungsstruktur nach einem der Ansprüche 1 bis 6, **dadurch gekennzeichnet, dass** mindestens ein weiterer Teilbereich mit mehreren Lagen, nämlich einer inneren Lage (117), einer äußeren Lage (119) und einer Zwischenlage (121), als wenigstens ein Rohrabschnitt (6') eines Stabes (6, 7, 8) der sich aus mehreren Stäben zusammensetzenden, fachwerkartigen Stützkonstruktion (5) ausgebildet ist.

8. Gründungsstruktur nach Anspruch 7, **dadurch gekennzeichnet, dass** die innere Lage (117) als Innenrohr und die äußere Lage (119) als ein im Abstand zum Innenrohr (117) verlaufendes Außenrohr (119) ausgebildet ist, zwischen denen die Zwischenlage (121), insbesondere aus Beton, ausgebildet ist.

9. Gründungsstruktur nach einem der vorstehenden Ansprüche, **dadurch gekennzeichnet, dass** an wenigstens einem, vorzugsweise zwei, axialen Ende eines Gründungspfahles (2, 3, 4) und/oder eines Stabes (6, 7, 8) ein Sandwich-Anschluss (50, 250, 350) angeordnet ist, welcher die innere Lage (19, 117) und die äußere Lage (20, 119) verbindet und in axialer Richtung eine Verlängerung des Gründungspfahles (2, 3, 4) und/oder des Stabes (6, 7, 8) in Form eines Anschlussrohres bildet.

10. Gründungsstruktur nach Anspruch 9,
**dadurch gekennzeichnet, dass** der Sandwich-Anschluss (50, 250, 350) einen in einem Querschnitt im Wesentlichen konischen Ringflansch (52, 252, 352) aufweist, wobei der Ringflansch an einem Ende mit der inneren Lage (19, 117) und der äußeren Lage (20, 119) und mit dem anderen Ende mit einem Anschlussrohr (51, 251, 351) verbunden ist.

11. Gründungsstruktur nach Anspruch 10,
**dadurch gekennzeichnet, dass** der Ringflansch (52, 252, 352) Ausnehmungen (71) zur Aufnahme von Bewehrungsstäben (33, 233) aufweist.

12. Gründungsstruktur nach einem der Ansprüche 9 bis 11, **gekennzeichnet durch** wenigstens einen, zwei oder mehr Anschlussrohre aufweisenden Verbindungskörper, zum Verbinden, insbesondere Verschweißen, mit Anschlussrohren bzw. Sandwich-Anschlüssen (50, 250, 350) jeweils eines Gründungspfahles (2, 3, 4) und wenigstens eines Stabes (6, 7, 8) der Stützkonstruktion (5).

13. Gründungsstruktur nach Anspruch 12, **dadurch gekennzeichnet, dass** der Verbindungskörper aus vormontierten Rohrstücken gebildet ist.

14. Gründungsstruktur nach einem der Ansprüche 7 bis 13, **dadurch gekennzeichnet, dass** jeder Rohrabschnitt (6') an wenigstens einem seiner Endbereiche mit einem Schott (23, 24) ausgerüstet ist, welches wenigstens seinen freien Querschnitt abdichtend verschließt.

15. Gründungsstruktur nach einem der vorstehenden Ansprüche, **dadurch gekennzeichnet, dass** jeder Rohrabschnitt (6') endseitig mindestens eine ringförmige Verbindungsfläche aufweist, welche in einer Ebene verläuft, die senkrecht zur Mittenachse des Rohrabschnittes (6') ausgerichtet ist.
